# EUROPEAN PATENT SPECIFICATION

(11) **EP 0 597 979 B1**
(45) Date of publication and mention of the grant of the patent: **27.03.1996**
(21) Application number: 92916983.7
(22) Date of filing: 12.08.1992
(51) Int. Cl.: B65D 88/52, B65G 67/20

(54) **TRANSPORTING GOODS**
Transport von Gütern
PLATE-FORME DE TRANSPORT DE MARCHANDISES

(30) Priority: 12.08.1991 GB 9117420
(43) Date of publication of application: 25.05.1994
(73) Proprietor: LAM, David Choon Sen, Finchley, London N3 (GB)
(72) Inventor: LAM, David Choon Sen, Finchley, London N3 (GB)
(74) Representative: Shaw, Laurence
(86) International application number: GB9201494
(87) International publication number: WO9303981

(56) References cited:
- EP-A- 064 852
- GB-A- 827 210
- GB-A- 1 357 233
- GB-A- 2 205 809
- NL-A- 8 403 761
- US-A- 3 735 713
- US-A- 3 807 581
- US-A- 3 938 678
- US-A- 4 108 455
- US-A- 4 834 000
- "Equipment specifications" from American President Lines.

## Description

This invention relates to the transport of goods.

A modern method of transporting goods involves the use of containers (hereinafter referred to as "shipping containers") of standard dimensions and having standard fittings enabling them to be locked onto specially adapted road trailers, railway wagons and ships. One problem with such transport is the expensive need to transport the empty large container to the site where they are to be filled. The problem is exacerbated in locations where it is difficult to transport the containers to the site where they are to be filled. Filling the containers conventionally at a port attracts a charge which would be better avoided or reduced. The operators work so quickly there is often damage to the cargo. Another problem is that it often takes a long time to fill or empty the shipping containers which takes the containers out of use for periods longer than strictly necessary for the mere transport of the goods. A charge is rendered for lifting a container off a ship and for lifting it on the ship, which is one more lift than strictly necessary merely to get the cargo on the ship. If space is created on the ship it becomes possible to discharge in one lift a 30/40 platform instead of lifting up and down 30 or 40 times.

It must be appreciated that certain items of cargo are often produced at a site which is inaccessible, or at least inconvenient to reach. Rubber for example is produced at plantations and must be transported from a country usually having poor quality roads - certainly in the region of the plantation - to a port from which it is shipped to an industrial country for processing. The condition of the local roads may limit the weight which can be transported. In an industrial country, e.g. the USA, there is a legal limit to the weight of a truck and its contents which can be moved on the roads, which limit would usually be exceeded if the truck was to carry a shipping container fully laden with a cargo of a material as dense as rubber

It is known to load cargo on to a platform which may then be moved. For example the platform may have lifting hooks in the corners so that the platform may be lifted using chains by a crane. The platform may also have tunnels or recesses to receive the forks of a fork lift.

NL-A-8403671 discloses a stackable wheeled loading platform having hinged sidewalls and hinged endwalls. The present invention is based on a first realisation that if the goods are loaded on a platform having means by which the platform may be moved in or out of a container some, if not all, of the above-mentioned problems will be solved. The invention is based on the second realisation that if the platform is provided with lifting means which may be stowed, a number of the platforms may be transported in a single container, so reducing the costs of moving them when they are empty.

Thus the invention provides a platform adapted for the transport of goods, the platform including column members the members being movable between one condition in which they are upright when a load of cargo may be present on the platform and a second condition in which they are horizontal whereby one platform may be stacked upon another, the platform including moving means, **characterised in that** the platform is dimensioned to be received as a clearance fit inside a shipping container and that lifting means are present on the column members.

Thus, the invention provides a means of transporting goods using a platform as defined in which the platform is first transported by road and/or rail to a site, then placing the platform on a road trailer or railway wagon, loading the platform, transporting the loaded platform by road or rail to the container and moving the platform on its wheels or rollers or like moving means into the container, including as appropriate transporting the container to a port of destination, removing the loaded platform and transporting to a place of use for the goods and there unloading the goods, moving the column members to the horizontal condition and then stacking the platform with other platforms and moving the stack of platforms inside the shipping container for return to the first site.

It is a much preferred feature of the invention that the platform be provided with wheels or rollers as the moving means.

Filling the container at, say, the port is feasible because of the simplicity of the operation and the speed with which it may be accomplished which should lead to a reduction in port charges. Since moving the platform into a container by rolling or the like is so quick, it is feasible to fill the container in the ship, so avoiding one lifting charge. Although it is necessary to transport platforms to the site for loading, it is possible to carry a plurality of platforms on one lorry or truck. In cases where it takes a long time for the supplier to fill a container, the capital represented by the platform which is standing idle is reduced compared to that represented by a container or a container chassis one for each container standing idle, since the Platform is less expensive to manufacture than a container or container chassis.

To facilitate loading a plurality of platforms on a lorry, the platform preferably includes recesses to receive the fork of a fork-lift truck of standard dimensions.

A column is preferably present at each corner of the platform. Preferably the lifting hooks are present at the top face of the columns. Preferably the columns are relatively tall so that the height of a platform when the columns are upright is in the proportion of about 15:1 compared to the height when the columns are horizontal.

The platform preferably includes means for immobilizing when within the container. In one alternative, the means for immobilizing the platform is a brake for each roller. In another alternative, the means for immobilizing the platform comprises means for lifting the rollers to an inoperative position. In yet another alternative, the means for immobilizing the platform comprises means for locking the platform in the container and, in this case, the means for locking the platform is preferably operable to lock the platform on a road trailer or railway wagon with standard international twist blocks when the platform is being removed from the container.

The invention also extends to a shipping container of standard dimensions in combination with a platform which is a clearance fit therein and which has means, preferably wheels or rollers enabling it to be moved into and out of the container when loaded.

The invention further extends to a shipping container of standard dimensions in combination with a plurality of platforms which together are a clearance fit therein. Preferably, each of the platforms is of dimensions which would, individually, provide a clearance fit in a shipping container of smaller standard dimensions.

A platform of the invention is preferably about 18 foot 6 inches (about 5.63 metres) long so that a single platform can be received in a 20 foot (about 6.09 metres) container or two such platforms can be received in line in a 40 foot (about 12.19 metres) long container. The width of the platform and the height of the column is selected so that there is a small clearance or gap between the platform and the facing inner wall of the container. The distance between the platform and the side walls may be about 2 inches (about 5.2cm) and between the platform and the ceiling may be about 3 inches (about 7.5cm).

Another important factor in determining transport costs is the maximum load allowable per truck for road transport: in the USA this is approximately 38 tons, including the vehicle weight. This means that if the total weight of vehicle and container and cargo will exceed the legal road weight, the shipper must either reduce the weight of cargo in the container or remove part of the load from the container at the port of arrival before it is put on the truck. Both options aggravate the cost. Because a platform of this invention weighs much less, typically 0.9 ton, more cargo can be carried without the risk of infringing the relevant road traffic regulations.

More specifically, in the USA, the maximum load allowable per truck inclusive of engine, trailer, fuel, cargo and chassis is approximately 38 tons. In the case of a 40 foot (about 12.19 metres) sea-going container the maximum allowable weight is approximately 26 tons plus its container weight of 5 ton giving total weight of 31 tons. The weight of the engine, chassis and trailer is approximately 13 tons, i.e.

| | | |
|---|---|---|
| | 26.0 | tons of cargo weight |
| | 5.0 | tons sea container weight |
| | 13.0 | tons truck engine trailer and chassis |
| Total | 44.0 | tons |

This combination will exceed the road allowable weight by 6.0 tons. As explained above, the only ways to sidestep the problem are either remove part of the cargo in the port (which will be expensive), or, to put less cargo in the port of origin. Which option is adopted depends on which cost is less, either part unloading in the arrival port and using ordinary lorries on arrival, or shipping less from the port of origin; usually the first option costs more because of additional port charges. Typically the shipper will reduce the weight down to 20 ton, to comply with the law. Because a platform of the invention weighs about 0.9 ton and can still carry much weight, the calculations are as follows

| | |
|---|---|
| cargo weight | 24.1 ton |
| platform weight | 0.9 ton |
| truck engine trailer and chassis | 13.0 ton |
| Total | 38.0 ton |

Therefore, an additional 4.1 ton cargo can be carried per container. In one specific example 100 sea containers loaded with cargo transported into a factory means, and 100 containers empty after discharge will have to be sent back to port. Using platforms of the invention in contrast, 100 rollout platforms with cargo transported into a factory means 5 truckloads after discharge will be sent back to port each having a stack of 20 platforms. There will thus be a saving of 95 trucking costs.

Yet another advantage of the invention is that when the platform is loaded on a rail wagon, the cargo may be unloaded from any side whereas in a container unloading may be from the short end only.

Embodiments of the invention will now be described, by way of example, with reference to the accompanying diagrammatic drawings, in which:
Figure 1 is a perspective view from above of an end portion of one platform embodying the invention;
Figure 2 is a perspective view from below of a portion of the platform of Figure 1;
Figure 3 is a perspective view from above of a platform including lifting columns at the shorter ends thereof;
Figure 4 is a perspective view, partly in section, of the platform of Figure 3;
Figure 5 is an exploded perspective view of a roller assembly of the platform of Figure 3;
Figure 6 and 7 are an exploded perspective view of one lifting column of the platform of Figure 4 in the vertical condition and horizontal condition respectively;
Figure 8 shows the block drawing to an enlarged scale at the top of the lifting columns shown in Figure 4;
Figure 9 is a perspective view of another embodiment of the invention with the columns in the upright condition;
Figure 10 is a perspective view of part of a stack of platforms according to Figure 9; and
Figure 11 is a perspective view of one column of the Platform of Figure 9 being prepared for horizontal stowing.

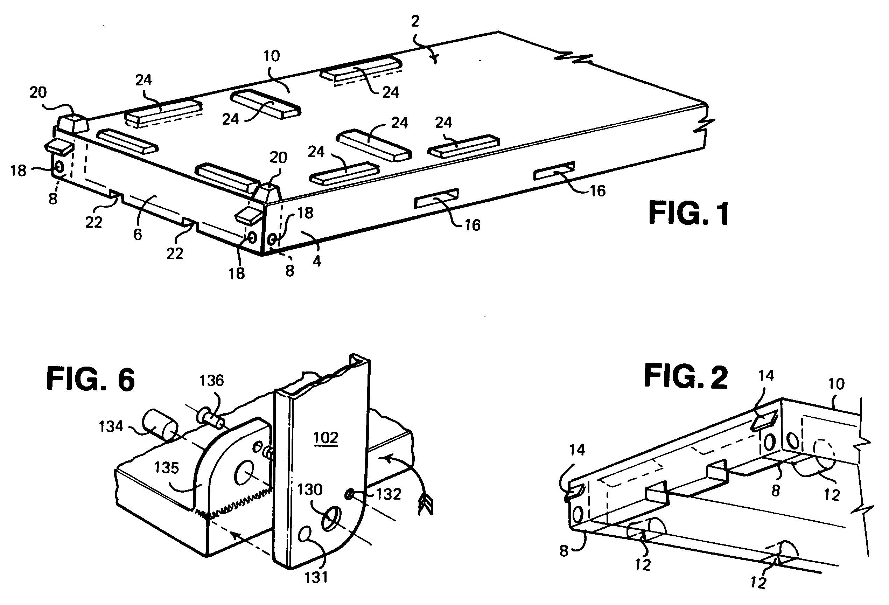

Referring to Figures 1 and 2, a steel platform 2 is constructed of peripheral-U-section frame members 4,6, interconnected by hollow corner posts or columns 8, and covered by a deck 10. The frame members 4 are hollow and rollers 12 are rotatably mounted therein. The rollers are mounted in a mechanism (not shown) controlled by levers 14 for extending respective rollers 12 beyond the frame members 4, as shown to the front of Figure 2, or retracting the rollers inside the frame members 4, as shown to the rear of Figure 2. The rollers may range from about 1.25 inch (about 3cm) to about 2.5 inch (about 6 cm) in diameter. The dimensions of the deck provide a clearance fit in a shipping container (not shown) of standard dimensions, so that, with the rollers in the extended position, the platform may be rolled in and out of the open end of the container. Whereas the platform is, therefore, of a more or less standard width, e.g. 7 ft 7 ins approximately (about 2.31 metres), the length may be chosen to suit the internal dimensions of the different lengths of container which are variously available. For example the platform may have a length to suit a 20 or a 40 ft container, e.g. 18 ft 6 inches (about 5.63 metres) or 19 ft 3 ins approximately (about 5.86 metres) or 39 ft 5 ins approximately (about 13.32 metres). The platform will typically measure about 7ft 3.75 ins (about 2.25 metres) wide and about 7ft 10 inches (about 2.41 metres) high.

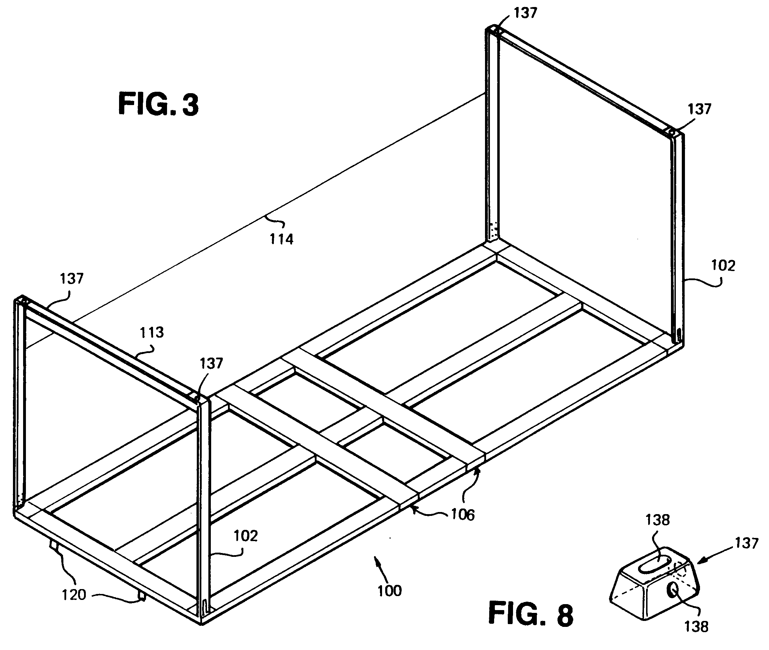

The side frame members 4 have recesses or tunnels 16 therein to receive the forks of a fork lift truck of standard dimensions. One or a stack of the platforms may be loaded onto a road trailer or railway wagon for transport to a remote site for loading or returning to port. The end posts or columns 8 are provided with holes 18 in which lifting hooks may be attached. The collapsible columns are not shown in Figures 1 and 2, but in Figures 3 to 11.

Each end frame member 6 ( only one is shown in Figure 1) is provided with slots 22 to receive hooks for lifting where a standard twist block crane is not available e.g. in a remote port or jetty.

Because of its structure, the platform is light in weight, say 0.9 tons. In use, the platform is loaded onto a road trailer or railway wagon in a stack and transported to a site where it is to be filled. The stack of platforms is off-loaded from the trailer or wagon and the platforms are loaded individually with the goods it is desired to transport. The loaded platforms are transported to, say, a port, by road trailer and/or railway wagon. At the port the platform is off-loaded from the lorry either by sliding it off or by lifting, to place it on the ground. It is then rolled into an empty container, which it may fill with clearance, or two or more short platforms may be rolled into one long container. Once inside the container the levers 14 are operated to retract the rollers inside the frame members 4 so immobilizing the platform.

In order to secure the load, the deck is provided with loops or hooks (not shown) through which ropes or straps may be passed.

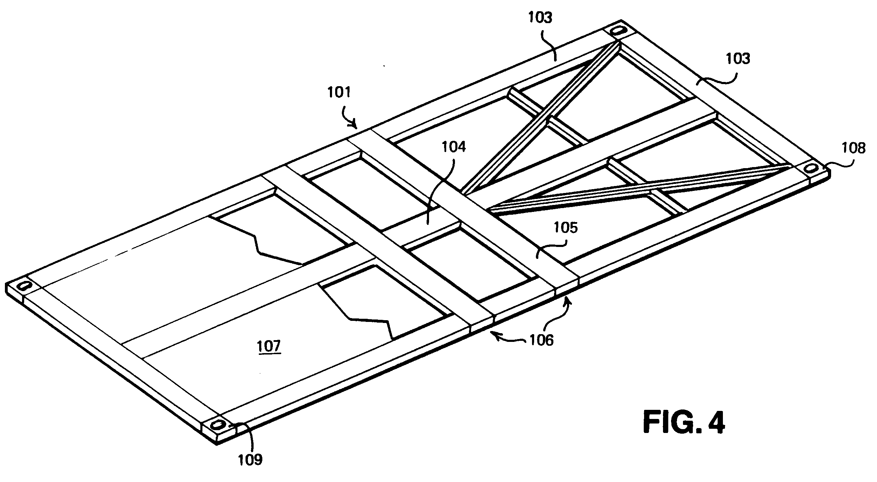

The platform 100 of Figure 3 to 8 comprises a rectangular base 101 having lifting columns 102 at each of the shorter ends. As best shown in Figure 4, the base comprises side walls 103 of rectangular tubular shape, having a longitudinal beam 104 and cross struts 105, the latter having edge recesses or sockets 106 to receive the blades or tines of a fork lift, not shown. The platform has a deck or floor 107 of wood or metal.

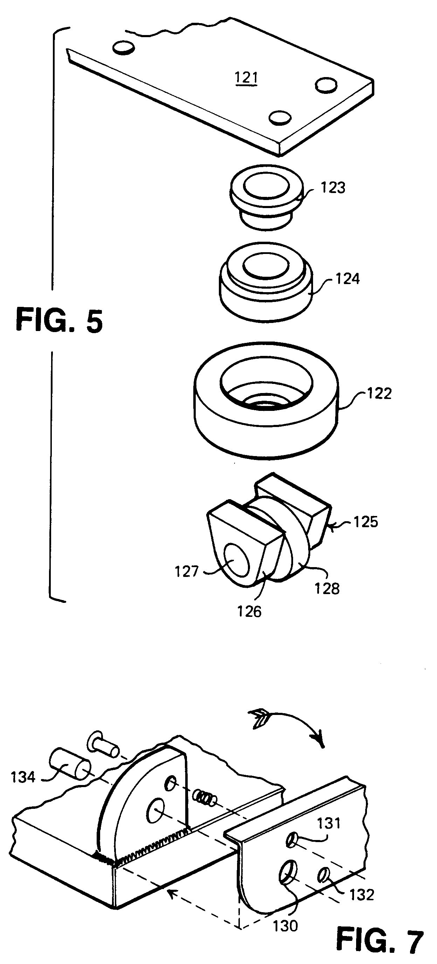

Rollers 120 are mounted on the underside of the base; there are eight such rollers for a platform of the dimensions shown in Figure 3. As best shown in Figure 5, a mounting plate 121 is Present below the base 100 at each selected location, and a roller assembly is secured thereto. Each assembly comprises a housing 122 containing an upper swivel 123 within a roller bearing 124, below is the roller shaft assembly 125 comprising two side arms 126 bridged by the shaft or axle 127 on which the roller wheel 128 is mounted.

As best shown in Figures 6 and 7, each column 102 is of channel section and has three holes 130, 131,132 at the foot thereof. The central hole 131 houses a permanent hinge pin 134 which extends into an upstanding block 135 at each corner of the base 101. A spring loaded pin 136 is present in the block to be received in either of the smaller holes 130, 132, dependent on whether the column is vertical (Fig. 6) or stowed horizontal (Fig 7). The top of the columns have twist blocks 137 which have slots 138 to enable connections to be made from different sides. The columns 102 at each end of the base 101 are joined by a cross member 113 and the columns at the ends may be joined by a line stopper 114. The assembly may be covered, e.g. by a tarpaulin when the cargo of goods is loaded on.

In embodiments (not illustrated) the platform may be locked on the road trailer or railway wagon by conventional twist locks. Additionally or alternatively the platform may be locked in position in the container by the twist locks. In another alternative, means are provided for braking the rollers to immobilise the platform. In yet another alternative, the rollers are replaced by wheels.

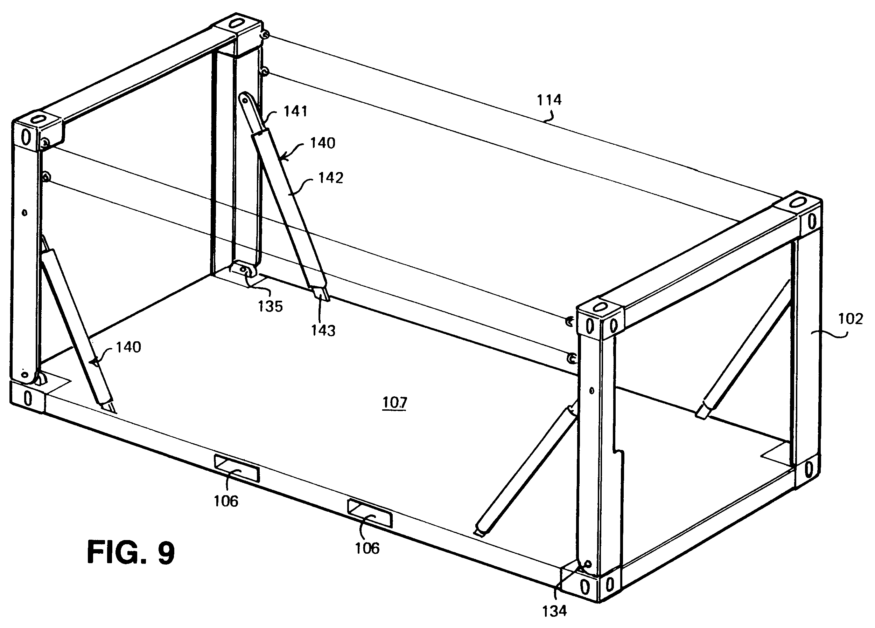

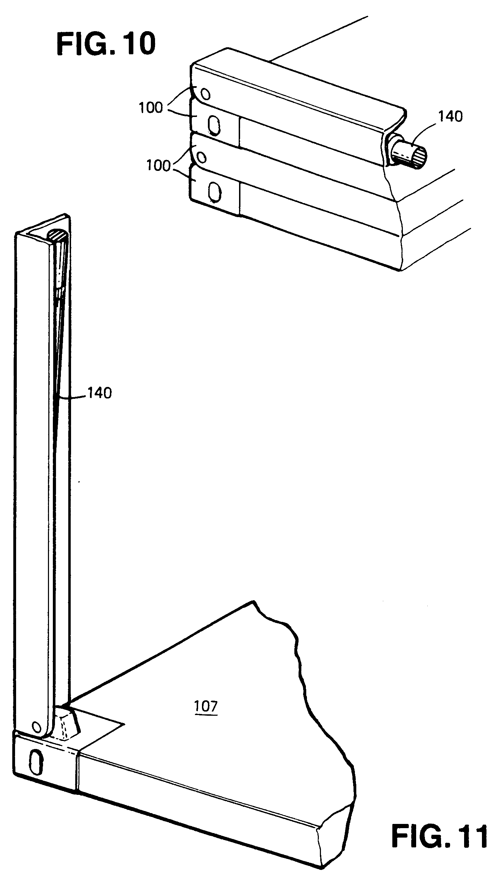

In the embodiment of Figures 9 to 11, for which the same reference numerals as those used in relation to Figures 3 to 8 will be used where possible, the columns 102 are provided with telescopic reinforcing struts 140. One end of arm 141 of a strut 140 is pivotally mounted towards the top of each column below the level of the line stopper 114, the arm being receivable in a cylindrical housing 142. The foot of the columns is hingedly mounted on the platform, so that when each column is raised (see Figure 11 for the stowed condition) the respective strut is extended and an arm 143 at the lower end of the housing 142 is extended to engage the platform base 101, so holding the column upright. A slot, not shown, may be provided in the base to receive the arm 143. When the columns are stowed, a stack of platforms 100 may be made, as shown in Figure 10.

The invention is not limited to the embodiments illustrated. The platform may also be a pallet. The moving means may be wheels or rollers as shown or a slide system capable of moving a platform laden with cargo. The columns may be provided with alternative raising and lowering means. The platform base may be preformed in one piece and lightweight materials, metallic or non-metallic, may be used.

## Claims

1. A platform (2,100) adapted for the transport of goods, the platform including column members (8,102), the members (8,102) being movable between one condition in which they are upright when a load of cargo may be present on the platform and a second condition in which they are horizontal whereby one platform (2,100) may be stacked upon another, the platform including moving means (12,120), characterised in that the platform is dimensioned to be received as a clearance fit inside a shipping container and that lifting means (137) are present on the column members (8,102).

2. A platform according to Claim 1 **characterised in that** the platform (2, 100) is dimensioned to be received as an interference fit inside a standard ISO shipping container.

3. A platform according to Claim 1 or 2, **characterised by** means for immobilising the loaded platform (2, 100) in the container.

4. A platform according to Claim 3, characterised in that the means for immobilising the platform is a brake for each moving means (12, 120).

5. A platform according to Claim 3 or 4, **characterised in that** means for immobilising the platform comprises means for locking the cargo or platform in the container.

6. A platform according to any preceding Claim, **characterised in that** means (136,140) are present to hold the columns (8, 102) in upright condition.

7. A method of transporting cargo using a platform (2, 100), the platform having moving means and having column members (8, 102) which in one condition are upright and in a second condition are horizontal, the members having lifting means (137) by which the platform may be lifted, the platform being dimensioned to be received as a clearance fit inside a shipping container, comprising transporting a platform by road and/or rail to a site, placing the platform on a road trailer or railway wagon, loading the platform, transporting the loaded platform by road or rail to the container and moving the platform on its moving means into the container, transporting the container to a port of destination, removing the loaded platform and transporting to a place of use for the cargo and there unloading the cargo.

8. A method according to Claim 7, including the further step of moving the column members (8, 102) to the horizontal condition and then stacking the platform (2, 100) with the other platforms and, moving the stack of platforms inside the shipping container for return to the first site.

9. A method according to Claims 7 or 8, including moving the platforms on the wheels or rollers into and out of the container.

## Patentansprüche

1. Plattform (2, 100) für den Transport von Gütern, wobei die Plattform Säulenelemente (8, 102) aufweist, wobei die Elemente (8, 102) zwischen einem Zustand, in dem sie aufrecht sind, wenn möglicherweise eine Frachtladung auf der Plattform vorhanden ist, und einem zweiten Zustand beweglich sind, in dem sie waagerecht sind, so daß eine Plattform (2, 100) auf eine andere gestapelt werden kann, wobei die Plattform ein Bewegungsmittel (12, 120) aufweist, dadurch gekennzeichnet, daß die Plattform so dimensioniert ist, daß sie in Spielpassung in einen Versandcontainer paßt, und daß Hebemittel (137) an den Säulenelementen (8, 102) vorhanden sind.

2. Plattform nach Anspruch 1, dadurch gekennzeichnet, daß die Plattform (2, 100) so dimensioniert ist, daß sie in Preßpassung in einen Versandcontainer gemäß ISO-Norm paßt.

3. Plattform nach Anspruch 1 oder 2, gekennzeichnet durch ein Mittel zum Immobilisieren der beladenen Plattform (2, 100) in dem Container.

4. Plattform nach Anspruch 3, dadurch gekennzeichnet, daß das Mittel zum Immobilisieren der Plattform eine Bremse für jedes Bewegungsmittel (12, 120) ist.

5. Plattform nach Anspruch 3 oder 4, dadurch gekennzeichnet, daß das Mittel zum Immobilisieren der Plattform ein Mittel zum Verriegeln der Fracht oder der Plattform in dem Container aufweist.

6. Plattform nach einem der vorhergehenden Ansprüche, dadurch gekennzeichnet, daß Mittel (136, 140) zum Festhalten der Säulen (8, 102) in aufrechtem Zustand vorhanden sind.

7. Verfahren zum Transportieren von Fracht mit einer Plattform (2, 100), wobei die Plattform ein Bewegungsmittel und Säulenelemente (8, 102) aufweist, die in einem Zustand aufrecht und in einem zweiten Zustand waagerecht sind, wobei die Elemente ein Hebemittel (137) aufweisen, mit dem die Plattform gehoben werden kann, wobei die Plattform so dimensioniert ist, daß sie in Spielpassung in einen Versandcontainer paßt, umfassend das Transportieren einer Plattform per Straße und/oder Schiene zu einem Ort, Plazieren der Plattform auf einem Straßenanhänger oder einem Eisenbahnwaggon, Beladen der Plattform, Transportieren der beladenen Plattform per Straße oder Schiene zu dem Container und Bewegen der Plattform auf ihrem Bewegungsmittel in den Container, Transportieren des Containers zu einem Zielhafen, Entfernen der beladenen Plattform und Transportieren derselben zu einem Benutzungsort für die Fracht und danach Entladen der Fracht.

8. Verfahren nach Anspruch 7, weiterhin umfassend den Schritt des Bewegens der Säulenelemente (8, 102) in den waagerechten Zustand und dann Stapeln der Plattform (2, 100) mit den anderen Plattformen und Bewegen des Plattformstapels in den Versandcontainer zwecks Rücktransports zum ersten Ort.

9. Verfahren nach Anspruch 7 oder 8, das das Bewegen der Plattformen auf den Rädern oder Rollen in den und aus dem Container beinhaltet.

## Revendications

1. Plate-forme (2,100) adaptée au transport de marchandises, la plate-forme comprenant des éléments en colonnes (8,102), ces éléments (8,102) étant amovibles entre un état dans lequel ils se trouvent en position verticale quand une charge de marchandises se trouve sur la plate-forme, et un deuxième état dans lequel ils se trouvent en position horizontale ce qui permet à une plate-forme (2,100) d'être superposée à une autre, la plate-forme comprenant des moyens mobiles (12,120), caractérisée en ce que la plate-forme a une dimension lui permettant d'être reçue en tant qu'ajustement avec jeu dans un conteneur et en ce que des moyens de levage (137) sont présents sur les éléments en colonnes (8,102).

2. Plate-forme qui, selon la revendication 1, est caractérisée en ce que la plate-forme (2,100) a une dimension lui permettant d'être reçue en tant qu'ajustement serré dans un conteneur conçu aux normes ISO.

3. Plate-forme qui, selon les revendications 1 ou 2, est caractérisée par des moyens permettant d'immobiliser la plate-forme chargée (2,100) dans le conteneur.

4. Plate-forme qui, selon la revendication 3, est caractérisée en ce que les moyens d'immobilisation de la plate-forme consistent en un frein pour chacun des moyens mobiles (12,120).

5. Plate-forme qui, selon les revendications 3 ou 4, est caractérisée en ce que les moyens d'immobilisation de la plate-forme comportent des moyens permettant de vetrouiller les marchandises ou la plate-forme dans le conteneur.

6. Plate-forme qui, selon toute revendication précédente, est caractérisée en ce que des moyens (136,140) sont présents pour maintenir les colonnes (8,102) à la verticale.

7. Méthode de transport de marchandises utilisant une plate-forme (2,100), la plate-forme ayant des moyens mobiles et ayant des éléments en colonnes (8,102) qui, d'une part occupent une position verticale et, d'autre part, une position horizontale, les éléments étant munis de moyens de levage (137) qui permettent à la plate-forme d'être soulevée, la plate-forme ayant une dimension lui permettant d'être reçue en tant qu'ajustement avec jeu dans un conteneur qui inclut le transport d'une plate-forme par route et/ou chemin de fer vers un site, le placement de la plate-forme sur une remorque routière ou un wagon de chemin de fer, le chargement de la plate-forme, le transport de la plate-forme chargée par route ou par rail vers le conteneur et le déplacement de la plate-forme sur ses moyens mobiles dans le conteneur, le transport du conteneur vers un port de destination, le retrait de la plate-forme chargée et son transport vers un endroit où la marchandise est appelée à être utilisée et où s'opère le déchargement de cette marchandise.

8. Méthode qui, selon la revendication 7, inclut l'étape supplémentaire du déplacement des éléments en colonnes (8,102) vers l'horizontale et l'empilage de la plate-forme (2,100) avec d'autres plates-formes ainsi que le déplacement de plates-formes dans le conteneur afin de retourner au premier site.

9. Méthode qui, selon les revendications 7 ou 8, inclut le déplacement des plates-formes sur roues ou rouleaux pour entrer et sortir du conteneur.
